# EUROPEAN PATENT APPLICATION

(11) **EP 4 131 101 A1**
(43) Date of publication of application: **08.02.2023**
(21) Application number: 21780220.6
(22) Date of filing: 24.03.2021
(51) Int. Cl.: G06Q 10/08

(54) **DELIVERY SYSTEM, USER TERMINAL, AND MANAGEMENT SERVER**

(30) Priority: 30.03.2020 JP 2020060321
(71) Applicant: Fujisawa, Kazunori, Tokyo 160-8486 (JP)
(72) Inventor: Fujisawa, Kazunori, Tokyo 160-8486 (JP)
(74) Representative: Grünecker Patent- und Rechtsanwälte PartG mbB
(86) International application number: PCT/JP2021/012235
(87) International publication number: WO 2021/200472

(57) **Abstract**

To provide a delivery system or the like that enhances effectiveness of leave-at-door delivery. In the delivery system, when leave-at-door delivery is designated at a user terminal, a leave-at-door delivery fee is collected from a client of the leave-at-door delivery, and points are provided to a client after the leave-at-door delivery is completed. The points corresponds to a part or the whole of the leave-at-door delivery fee or an amount obtained by adding a predetermined amount of money to the part or the whole of the leave-at-door delivery fee.

## Description

### Technical Field

The present invention relates to a delivery system or the like for widely managing shipment of commodities or the like or delivery of commodities, packages, or the like, and more specifically to a delivery system or the like for flexibly operating shipment of commodities or the like or delivery of commodities, packages, or the like in a retail industry, an online shopping industry, or the like.

### Background Art

Conventionally, a technique for performing inventory management of commodities, for example, to shorten a transport time period of the commodities and reduce a bring-out rate of deliveries, to improve an overall delivery efficiency has been provided.

As to an improvement in delivery efficiency, a technique for putting, when a recipient is absent upon delivery, an absence notice containing a location or the like where a storage container is installed in a recipient's home, causing the storage container to read a bar code added to a delivery notice, and storing a delivered package in the storage container, for example, has been proposed (Patent Literature 1).

That is, Patent Literature 1 discloses a home delivery system including pickup means for picking up a package deposited from a client, transport means for transporting the package picked up, delivery means for delivering the package transported by the transport means to a recipient, the home delivery system including storage means for storing the package when the recipient is absent upon delivery, in which an absence notice having a bar code added thereto is placed at a recipient's home when the recipient is absent upon delivery, the delivered package is stored in the storage means with a delivery notice having the same bar code added thereto read into the storage means, and the recipient causes the storage means to read the bar code on the absence notice to unlock the storage means and take out the package.

A technique for providing support to more reliably complete delivery by a deliverer when a recipient of an ordered package has changed a method for receiving the package has also been proposed (Patent Literature 2).

That is, Patent Literature 2 discloses a delivery management system including a terminal carried by a deliverer of an ordered package, and a delivery management device including a change information receiving unit that receives change information representing a change in a receiving method designated when the package is ordered from a terminal to be used by a recipient of the package, an acquisition unit that acquires, from a storage unit storing delivery status information representing a delivery status of the package, the delivery status information, a determination unit that determines whether or not the package is being delivered based on the received change information and the acquired delivery status information, and a transmission unit that transmits information indicating that the receiving method has been changed to the terminal carried by the deliverer when the determination unit determines that the package is being delivered.

A home delivery technique for receiving a home delivery commodity using a delivery/receiving set at the time of absence upon delivery of the home delivery commodity has also be proposed (Patent Literature 3).

That is, Patent Literature 3 discloses a home delivery system including a management computer under control of a management company and having information about a contractor stored in its storage means, an information terminal under control of a home delivery company contracting with the management company, in which registration information is written into the storage means in the management computer and accessible to the management computer, and a delivery/receiving set installed in front of a contractor's home, in which the home delivery company accesses the management computer using the information terminal and obtains information about delivery to retain the home delivery commodity in the delivery/receiving set at the contractor's home based on the information.

### Citation List

### Patent Literature

Patent Literature 1: Japanese Patent Laid-Open No. 10-245094
Patent Literature 2: Japanese Patent Laid-Open No. 2019-16157
Patent Literature 3: Japanese Patent Laid-Open No. 2017-154849

### Summary of Invention

### Technical Problem

However, in a recent online shopping industry or the like, competition among short-time delivery services has been activated, and an improvement in overall delivery efficiency therefor has been requested. For example, an efficient system operation to be performed when a delivery destination is absent, for example, has been expected. Among them, an improvement over a system operation or the like for enhancing effectiveness of so-called leave-at-door delivery (delivering a commodity at a predetermined location such as the front of an entrance, a garage, or a home delivery box at a delivery destination even when a recipient is absent) is expected.

### Solution to Problem

A delivery system according to one embodiment of the present invention includes
a user terminal for designating leave-at-door delivery for delivering a delivery to a predetermined location at a delivery destination even when a recipient is absent,
a company terminal into which a delivery company inputs completion of the leave-at-door delivery, and
a management server that manages a progress status of the leave-at-door delivery, in which
the user terminal includes
a user display unit that displays a leave-at-door designation screen on which the leave-at-door delivery is designated, and
a user control unit that controls the user terminal,
the company terminal includes
a company display unit that displays a leave-at-door delivery completion input screen into which the completion of the leave-at-door delivery is inputted, and
a company control unit that controls the company terminal,
the management server includes
a leave-at-door delivery database that stores information about the leave-at-door delivery, and
a server control unit that controls the management server,
the user display unit
displays a leave-at-door delivery fee when the leave-at-door is designated, and
displays a point provision notification for notifying that points corresponding to a part or the whole of the leave-at-door delivery fee or an amount obtained by adding a predetermined amount of money to the part or the whole of the leave-at-door delivery fee have been provided at least on condition that the leave-at-door delivery is completed,
the user control unit notifies, when the leave-at-door delivery has been designated on the leave-at-door delivery designation screen, the management server of information about the leave-at-door delivery,
the company control unit notifies, when the completion of the leave-at-door delivery is inputted on the leave-at-door delivery completion input screen, the management server of the completion of the leave-at-door delivery, and
the server control unit
registers a need for the leave-at-door delivery in the leave-at-door database at least on condition that the designation of the leave-at-door delivery is received from the user terminal, and collects the leave-at-door delivery fee from a client of the leave-at-door delivery, and
performs point provision processing for providing the points to the client of the leave-at-door delivery at least on condition that the completion of the leave-at-door delivery is received from the company terminal.

### Advantageous Effects of Invention

A delivery system or the like according to one embodiment of the present invention makes it possible to urge a client (user) of leave-at-door delivery to deliberately designate the leave-at-door delivery by collecting a leave-at-door delivery fee from the client when the leave-at-door delivery is designated. Point provision processing is performed when the leave-at-door delivery is completed, thereby making it possible to urge the client to designate the next and subsequent leave-at-door delivery services. Thus, an effect of enabling an efficient operation to be performed when a delivery destination is absent, for example, and enabling effectiveness of so-called leave-at-door delivery.

### Brief Description of Drawings

[Figure 1] Figure 1 is an explanatory diagram illustrating a facility and a distribution path in a delivery system according to an embodiment of the present invention.
[Figure 2] Figure 2 is an explanatory diagram illustrating an entire configuration example of the delivery system according to the embodiment of the present invention.
[Figure 3] Figure 3 is an explanatory diagram illustrating a functional block configuration of a management server in the delivery system according to the embodiment of the present invention.
[Figure 4] Figure 4 is an explanatory diagram illustrating an external configuration example of an information processing apparatus (user terminal) in the delivery system according to the embodiment of the present invention.
[Figure 5] Figure 5 is an explanatory diagram illustrating a functional block configuration of hardware constituting the information processing apparatus (user terminal) according to the embodiment of the present invention.
[Figure 6] Figure 6 is an explanatory diagram illustrating an external configuration example of an information processing apparatus (delivery terminal or company terminal) in the delivery system according to the embodiment of the present invention.
[Figure 7] Figure 7 is an explanatory diagram illustrating a functional block configuration of hardware constituting the information processing apparatus (delivery terminal or company terminal) according to the embodiment of the present invention.
[Figure 8] Figure 8 is a flowchart illustrating a normal processing operation flow at the time of leave-at-door delivery in the delivery system according to the embodiment of the present invention.
[Figure 9] Figure 9 is an explanatory diagram illustrating a first display example of an information processing apparatus (user terminal) in the delivery system according to the embodiment of the present invention.
[Figure 10] Figure 10 is an explanatory diagram illustrating a second display example of the information processing apparatus (user terminal) in the delivery system according to the embodiment of the present invention.
[Figure 11] Figure 11 is an explanatory diagram illustrating a third display example of the information processing apparatus (user terminal) in the delivery system according to the embodiment of the present invention.
[Figure 12] Figure 12 is an explanatory diagram illustrating a fourth display example of the information processing apparatus (user terminal) in the delivery system according to the embodiment of the present invention.
[Figure 13] Figure 13 is a flowchart illustrating a processing operation flow at the time of the leave-at-door delivery being unavailable in the delivery system according to the embodiment of the present invention.
[Figure 14] Figure 14 is a flowchart illustrating a processing operation flow at the time of completion of leave-at-door delivery and no acceptance from a customer in the delivery system according to the embodiment of the present invention.

### Description of Embodiment

A delivery system or the like according to an embodiment of the present invention will be described in detail below with reference to the drawings. Although in the following embodiment of the present invention, a delivery target is a commodity for convenience of description, the present invention is not limited to this, but is also applicable to a package as long as it is not unreasonable in view of the spirit of the invention (the commodity, the package, and the like are generically referred to as a "commodity or the like" or only merely a "commodity").

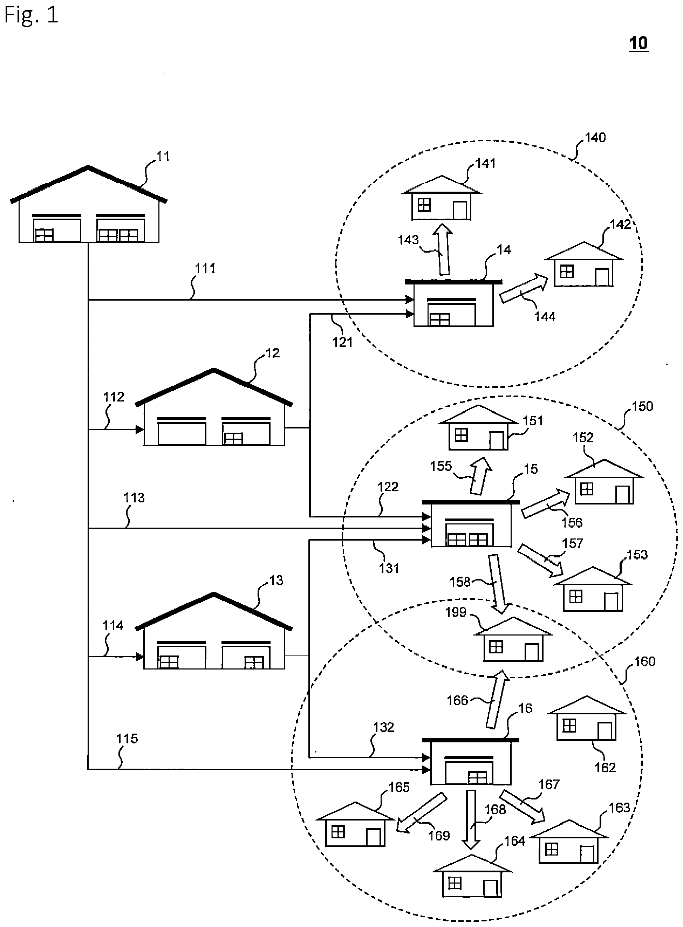

Figure 1 schematically illustrates a facility and a distribution path, for example, in a delivery system according to an embodiment of the present invention. In the same drawing, a delivery system 10 viewed from the facility and the distribution path generally includes distribution centers 11 to 13 and nearest bases 14 to 16, and constitutes a part of a large distribution network that distributes commodities or the like to customer's homes 141 to 142, 151 to 153, 162 to 165, and 199 via paths 143 to 144, 155 to 158, and 166 to 169.

The respective numbers of the distribution centers 11 to 13 and the nearest bases 14 to 16 are not limited to the numbers, but can include any number of centers and any number of distribution bases. For easy understanding, the present invention will be described below along a model illustrated in Figure 1 for convenience.

### [Distribution Center and Nearest Base]

Although the present invention is not limited to this, the facility in the distribution system according to the embodiment of the present invention includes at least the two types of facilities. For example, the nearest base according to the embodiment of the present invention is provided as a geographic base that can deliver commodities to the customer's home within a predetermined time period in addition to a distribution center as a conventional distribution base.

That is, the nearest base is a delivery base provided such that commodities or the like can be delivered to a customer in a short time.

As illustrated in Figure 1, the distribution centers may respectively have different roles. For example, in the same drawing, the distribution center 12 delivers commodities or the like to the nearest bases 14 and 15, respectively, via the paths 121 and 122, and the distribution center 13 delivers commodities or the like to the nearest bases 15 and 16, respectively, via the paths 131 and 132. On the other hand, the distribution center 11 delivers commodities or the like to the other distribution centers 12 and 13, respectively, via the paths 112 and 114. In addition, the distribution center 11 also plays a role of delivering commodities or the like to the nearest bases 14, 15, and 16, respectively, via the paths 111, 113, and 115. For example, commodities or the like are generally supplied to the nearest base 14 from the geographically near distribution center 12. However, if there is no inventory in the distribution center 12, commodities or the like may be supplied to the nearest base 14 from the distribution center 11.

A path for directly delivering commodities or the like to the customer's home from each of the distribution centers 11 to 13 may be provided, which is not illustrated in Figure 1 (which is not an essential part in the present invention, and thus is not illustrated).

In Figure 1, a nearest area 140 represents an area to which commodities or the like can be delivered within a predetermined time period (e.g., 30 minutes, one hour, etc., which may be several hours) from the nearest base 14, and the same area schematically includes the customer's homes 141 and 142.

Similarly, a nearest area 150 represents an area to which commodities or the like can be delivered within a predetermined time period (e.g., 30 minutes, one hour, etc., which may be several hours) from the nearest base 15, and the same area schematically includes the customer's homes 151, 152, 153, and 199. A nearest area 160 represents an area to which commodities or the like can be delivered within a predetermined time period (e.g., 30 minutes, one hour, etc., which may be several hours) from the nearest base 16, and the same area schematically includes the customer's homes 162, 163, 164, 165, and 199.

In the same drawing, the customer's home 199 is also included in both the nearest area 150 and the nearest area 160 by way of example. This means that commodities or the like can be delivered to the customer's home 199 within a predetermined time period from both the nearest base 15 and the nearest base 16 (e.g., commodities or the like can be delivered in 35 minutes from the nearest base 15 to the customer's home 199, and commodities or the like can be delivered in 40 minutes from the nearest base 16 to the customer's home 199).

Although the present invention is not limited to this, commodities to be handled can be provided with two types of sections "stock commodities" and "non-stock commodities" in a delivery system according to the embodiment of the present invention. The commodity sections are separated depending on whether a routine demand from a customer within a nearest area of a nearest base is high or low. The commodities each having a high routine demand from the customer within the nearest area of the nearest base are respectively partitioned as the stock commodities, and are managed such that the predetermined number of commodities are always available in the nearest base even when not ordered by the customer.

On the other hand, the non-stock commodities are delivered to the nearest base from the distribution center and are delivered to a customer's home in the nearest area at a time point where they are ordered by the customer (or may be directly delivered to the customer's home from the distribution center).

"Stock commodities" and "non-stock commodities" are selected on a system for each nearest area depending on whether a routine demand within the nearest area is high or low, and thus are not uniformly determined depending on a commodity section (a household electric appliance, a book, a cosmetic product, etc.). However, as a general tendency, household electric appliances such as a refrigerator and a large-sized television may be partitioned into the non-stock commodities, and daily necessaries such as shampoo and toilet paper may be partitioned into the stock commodities. The stock commodities geographically and temporally vary depending on an area or a situation such as a situation immediately after an annual event or an earthquake.

"Stock commodities" and "non-stock commodities" in the present specification are defined below.

Stock commodities: The stock commodities are commodities that have been each repeatedly demanded in a short period from a customer within a nearest area. Examples include daily necessaries and consumables. In the embodiment of the present invention, the stock commodities are commodities to be managed such that the predetermined number of commodities are always stocked in a nearest base.

Non-stock commodities: The non-stock commodities are commodities other than the stock commodities. Typically, the non-stock commodities are commodities delivered from a distribution center at a time point where they are ordered by a customer. Examples include a high-quality commodity such as a large-sized household electric appliance or a camera.

The present invention does not necessarily need the above-described commodity sections, and is not limited to these even when "stock commodities" and "non-stock commodities" are separately described in the following embodiment (may be alternatively referred to as normal commodities).

### [Distribution Management]

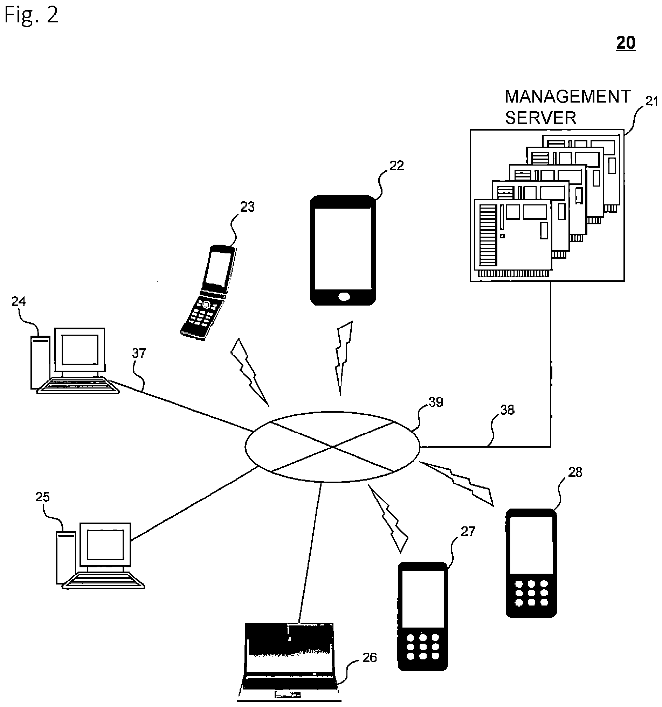

In the above description, a portion described as "a commodity or the like can be delivered within a predetermined time period from a nearest base" or "when there is no inventory", for example, can be judged by management of a time period (estimated time period) required for delivery and an inventory quantity of commodities or the like at a base on the system. Although an entire configuration example of the delivery system according to the embodiment of the present invention will be described below with reference to Figure 2, a management server in the delivery system according to the embodiment of the present invention, for example, is installed in any one of distribution centers or nearest bases in Figure 1 or an office building or the like not illustrated, and the management server is connected to each of the centers and each of the bases via an information terminal and a network, and manages an inventory status of commodities or the like and respective numbers of commodities to be loaded and unloaded in each of the bases or the like and a delivery status between the bases or to a destination from moment to moment. Further, from these actual results, for example, a delivery time period between the bases or to the destination is calculated, and is sequentially updated and managed.

Therefore, each of the paths illustrated in Figure 1 is not always only one route. Although the path from the distribution center 11 to the nearest base 14 is managed as 111 on the system, for example, one or more routes other than the path can also be stored and managed as an alternative route. Although the path from the nearest base 14 to the customer's home 141 is also managed as 143 on the system in the same drawing, one or more alternative routes can also be stored and managed.

The alternative routes are alternatively adopted depending on a traffic condition of the moment, and the adopted alternative route can be designated for a specific delivery facility (base) or delivery means (delivery vehicle), for example.

### [Sales Management]

In the delivery system according to the embodiment of the present invention, sales management of commodities or the like is also performed. The delivery system according to the embodiment of the present invention also operates simultaneously with a store POS cash register or a mail-order sales (electronic commerce) system not illustrated, and manages actual sales results in a store and actual sales results through mail order for each customer. As a database therefor, databases (D1) to (D8), as described below, are included in the management server in the one embodiment. References and update requests from various terminals can be made.

### (D1) Customer management database

A customer management database is a database in which items relating to a customer are registered, in which personal information such as a name, an address, and a telephone number of the customer and appended information such as held points and a nearest base are registered.

### (D2) Commodity management database

A commodity management database is a database in which items relating to a commodity are registered, in which a commodity name, a commodity code associated with a JAN code, and the like are registered and managed.

### (D3) Inventory management database

An inventory management database is a database for managing a commodity inventory for each base, and appropriately cooperates with the commodity management database, and a required table is derived and extracted.

### (D4) Warehouse management database

A warehouse management database is a database for managing a commodity inventory to be stored in a warehouse in a distribution center or the like.

### (D5) Sales Management Database

A sales management database is an actual result management database relating to sold commodities for each base or store.

### (D6) Stock candidate commodity database (or table)

A stock candidate commodity database is a database derived and extracted from the commodity management database and the inventory management database. Description of an example of extraction is omitted.

### (D7) Stock desire commodity database (or table)

A stock desire commodity database is a stock desire commodity database for each customer and for each nearest base derived from the commodity management database, the inventory management database, and the customer management database. Description of an example of extraction is omitted.

### (D8) Stock commodity database (or table) for each nearest base (for each customer)

A stock commodity database is a database for performing stock commodity inventory management for each nearest base derived from the commodity management database, the inventory management database, and the customer management database. Description of an example of extraction is omitted.

### [Roles of Nearest Base]

In a nearest base, a distribution system including the delivery system according to the embodiment of the present invention plays the following roles (system operations and works by workers such as a staff within the base are collectively listed).
(1) Storage and sorting of target stock commodities and update management of the target stock commodities.
(2) Delivery processing to be performed when the target stock commodity is ordered by a customer within a nearest area (picking and destination labeling of the ordered commodity).
(3) Temporary storage and delivery to a customer's home to be performed when a non-stock commodity ordered by the customer within the nearest area is delivered from a distribution center (typically, the non-stock commodity is delivered to a nearest base with destination labeling completed).
(4) Together packaging delivery of the non-stock commodity and the stock commodity ordered by the customer within the nearest area (if the non-stock commodity and the stock commodity are together packaged and delivered, together packaging work and destination labeling work are performed in the nearest base).
(5) Redelivery to be performed when the customer within the nearest area was absent, although the non-stock commodity and the stock commodity have been delivered to the customer.
(6) Simultaneous delivery of a stock commodity additionally ordered at the time of redelivery in the above item (5).

In the embodiment of the present invention, delivery from the distribution center to the nearest base is performed as a business operation within the same company, and is not entrusted to another delivery company or the like. For example, the company delivers target commodities approximately several times per day by delivery of its own within the company.

Figure 2 is an entire configuration example of the delivery system according to the embodiment of the present invention.

As illustrated in Figure 2, a delivery system 20 includes, as a configuration in the one embodiment, a management server 21, and various types of information processing apparatuses to be used by a user (customer), a deliverer, or the like (in the drawing, a portable information terminal or a tablet terminal 22, a mobile phone 23, PCs 24 to 26, and deliverer terminals 27 and 28 are illustrated by way of example, which may be hereinafter generically referred to as "various types of terminals" or also merely referred to as "terminals"). The management server 21 and the various types of terminals in the delivery system 20 are connected to be mutually communicable via a dedicated line and a public line such as the Internet (37 to 39 as a wired line), as illustrated in Figure 2. The line may be wired or wireless. If the line is wireless, the portable information terminal or the tablet terminal 22, the mobile phone 23, and the deliverer terminals 27 and 28 wirelessly enter the Internet 39 via a base station, an access point, or the like not illustrated, and is further connected to be mutually communicable with the management server 21 via the line 38.

Although the deliverer terminals 27 and 28 may each include a POS terminal, the present invention is not limited to this.

The access point means a radio for mutually connecting wireless terminals such as a PC and a smartphone and connecting the wireless terminals to another network. Typically, the access point is a device that operates with a communication protocol of a first layer (physical layer) and a second layer (data link layer) in an OSI reference model.

The mobile phone, the portable information terminal, or the tablet at the time point of filing of the present application may have a similar processing capability (a communication processing speed, an image processing capability, etc.) as that of the personal computer (PC), and should be said as a small computer.

A program or software required for the embodiment of the present invention is generally installed or stored in an HDD, an SSD, or the like in a storage unit in the PC or the portable information terminal. The program or the software is read into a memory in the storage unit, as needed, as a software module of its whole or part and is operated and executed in a CPU when executed.

Alternatively, a browser-based computer or portable information terminal can also be adopted. In this case, a program is distributed to the terminal from another server or computer, as needed, and is executed by a browser on the terminal.

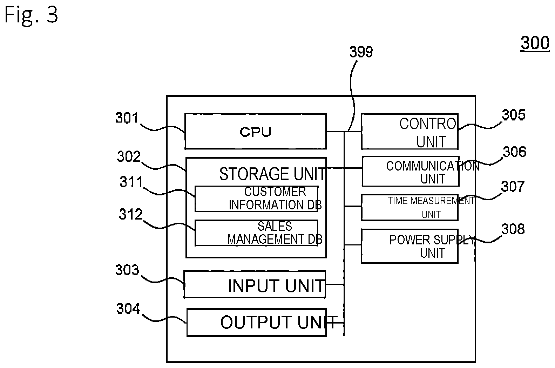

A hardware configuration of the management server 21 can basically adopt a PC (described below with reference to Figure 3, as a precaution). Although the present invention is not limited to this, the management server 21 can also have a configuration suitable for processing of large-scaled data by operating a plurality of PCs (several tens to several tens of thousands as an example) in parallel in raising a hardware specification, as needed.

Figure 3 is a functional block diagram of a management server in the delivery system according to the embodiment of the present invention. By way of example, an operation of the management server is implemented by each operation of hardware described below and a cooperation operation between software and the hardware.

In Figure 3, a management server 300 as an entire hardware block generally includes a CPU 301 for performing various types of comparison and operation processing, a storage unit 302 such as a RAM, a ROM, and a flash memory, an input unit 303 such as a keyboard and a pointing device, an output unit 304 such as a display and a speaker, a control unit 305 for various types of signal control, a communication (interface) unit 306 (that may be either wireless or wired), a time measurement unit 307 for measuring time or the like, and a power supply unit 308.

The modules are appropriately connected to one another via a communication bus and a power feed line, as needed, (the lines are collectively represented as a wire connection 399 appropriately divided for convenience in Figure 3).

A program or software to be executed on the management server 300 required for the embodiment of the present invention is generally installed or stored in a hard disk, an SSD (solid state drive), a flash memory, and the like constituting the storage unit 302. The program or the software is read into a memory in the storage unit 302, as needed, as a software module of its whole or part and is operated and executed in the CPU 301 when executed.

In the embodiment of the present invention, the storage unit 302 includes a customer management database 311 and a sales management database 312. The customer management database 311 (hereinafter also referred to as "customer management DB 311") is a database in which items relating to a customer are registered, in which personal information such as a name, an address, and a telephone number of the customer and appended information such as held points and a nearest base are registered as an example. The points may be electronic money. The points may be exchanged to another electronic money or cash. Information about a customer charge (including a leave-at-door delivery charge) is also registered in the customer management DB 311. Information about a customer charge caused by settlement may be managed by another server. The sales management database 312 (hereinafter also referred to as "sales management DB 312) is an actual result management database relating to sold commodities for each base or store. Information about setting of leave-at-door delivery, a progress status of delivery and leave-at-door delivery, and the like is also registered and managed in addition to a delivery status of commodities or the like in the sales management DB 312.

In the embodiment of the present invention, the control unit 305 performs control relating to progress status management of delivery and leave-at-door delivery (details of which will be described below).

The operation and the execution need not necessarily be performed in a central processing unit such as the CPU 301, and can also be performed by using an auxiliary operation apparatus such as a digital signal processor (DSP) not illustrated.

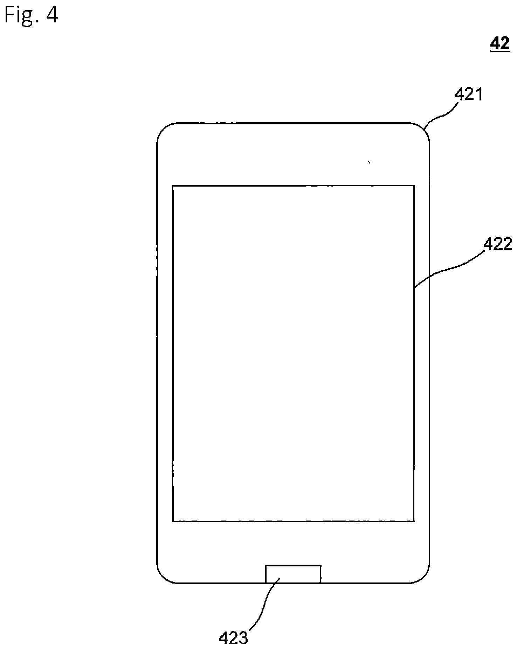

Figure 4 illustrates an external configuration of a tablet terminal 42 (22) as an information processing apparatus or a user terminal in the delivery system according to the embodiment of the present invention. In Figure 4, the user terminal (tablet terminal) 42 includes a housing unit 421, a display 422, and a hardware button 423 provided in a lower center portion of the housing unit 421. The display 422 is typically composed of a liquid crystal display (LCD) or the like, and can display various information such as characters, a still image, and a moving image. A menu button and a software keyboard are displayed on the display 422, and are touched with a finger or a touch pen (not illustrated), for example, to issue an instruction (command) to the tablet terminal 42. Although the above-described hardware button 423 is not an essential constituent element in this respect, the hardware button 223 is mounted as a button having a predetermined function for convenience of description of the present invention. Needless to say, the hardware button 423 can also be replaced with a menu button displayed on a part of the display 422.

The display 422 includes a multi-touch input panel, and touch input position coordinates on the touch input panel are transmitted to a processing system (CPU) of the tablet terminal 42 via an input device interface (not illustrated) and are processed. The multi-touch input panel is configured to be able to simultaneously sense a plurality of contact points for the panel. The detection (sensor) can be implemented using various methods, and is not necessarily limited to a contact sensor. For example, an instruction point for the panel can also be extracted using an optical sensor. Further, as the sensor, a capacitive sensor that senses contact of a person's skin can also be used in addition to a contact type sensor and an optical sensor.

The tablet terminal 42 can also include a microphone and a speaker, which do not appear in Figure 4. In this case, a user's voice or the like picked from the microphone can be determined and set as an input command. Further, a camera device such as a CMOS can also be mounted on a back surface of the tablet terminal 42, for example, which does not appear in Figure 4.

In the tablet terminal 42 in the embodiment of the present invention, a recipient can designate or indicate leave-at-door delivery for delivering commodities or the like to a predetermined location at a delivery destination even when absent (details of which will be described below).

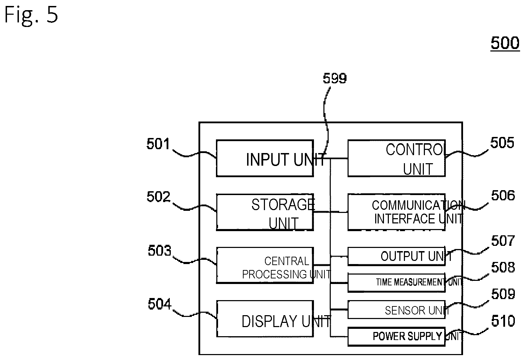

Figure 5 illustrates a functional block diagram of hardware constituting the tablet terminal 42 (22) according to the embodiment of the present invention. An operation of the tablet terminal 42 is implemented by each operation of the hardware described below and a cooperation operation between software and the hardware.

In Figure 5, a tablet terminal 500 as an entire hardware block generally includes an input unit 501 composed of a multi-touch input panel, a microphone, and the like provided in the hardware button 423 and the display 422 in Figure 4, a storage unit 502 composed of a hard disk, a RAM, and/or a ROM or the like for storing a program, data, and the like, a central processing unit 503 composed of a CPU that uses the program to perform various numerical calculations and logic operations, a display unit 504 composed of the display 422 and the like, a control unit 505 for controlling a chip, an electric system, and the like, a communication interface unit 506 composed of a slot for accessing the Internet, a port for performing optical communication, and a communication interface, an output unit 507 such as a speaker, a vibration, and an infrared projector, a time measurement unit 508 for measuring time or the like, a sensor unit 509 composed of an image sensor such as a CMOS, an infrared sensor, an inertial sensor, and the like, and a power supply unit 510 for supplying power to each of modules in an apparatus, and the modules are appropriately connected, as needed, to one another via a communication bus and a power feed line (the lines are collectively represented as a wire connection 599 appropriately divided for convenience in Figure 5).

The sensor unit 509 may include a GPS sensor module for identifying a position of the tablet terminal 500 (22). Signals respectively detected by the image sensor such as a CMOS, the infrared sensor, and the like constituting the sensor unit 509 can be processed as input information in the input unit 501.

A program or software to be executed on the tablet terminal 500 required for the embodiment of the present invention is generally installed or stored in a hard disk, an SSD (solid state drive), a flash memory, and the like constituting the storage unit 502. The program or the software is read into a memory in the storage unit 502, as needed, as a software module of its whole or part and is operated and executed in the CPU 503 when executed.

The operation and the execution need not necessarily be performed in the central processing unit 503 such as the CPU, and can also be performed by using an auxiliary operation device such as a digital signal processor (DSP) not illustrated.

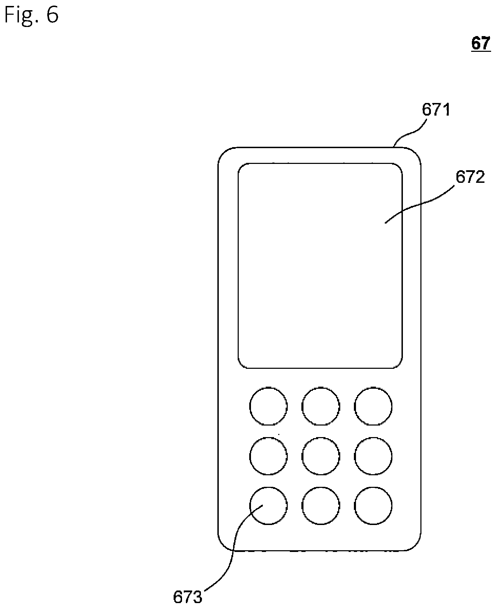

Figure 6 illustrates an external configuration of a deliverer terminal 67 (27) as an information processing apparatus or a deliverer terminal (or a company terminal) in the delivery system according to the embodiment of the present invention. In Figure 6, the deliverer terminal 67 includes a housing unit 671, a display 672, and a plurality of hardware buttons 673 provided in a lower portion of the housing unit 671. Respective basic configurations and functions of the housing unit 671, the display 672, the hardware button 673, and the like in the deliverer terminal 67 are similar to those of the housing unit 421, the display 422, the hardware button 423, and the like in the tablet terminal 42 or are known, and detailed description thereof is omitted.

In the deliverer terminal 67 in the embodiment of the present invention, the deliverer can input completion of leave-at-door delivery. When the completion of the leave-at-door delivery is inputted, the deliverer terminal 67 performs various types of processing caused by the input (details of which will be described below).

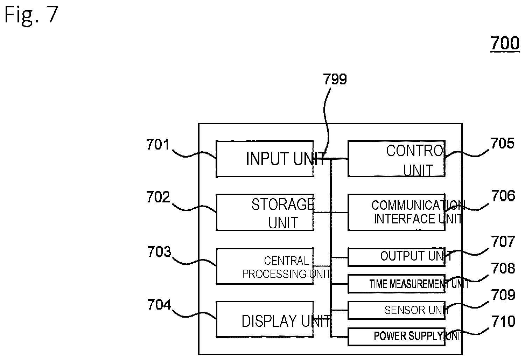

Figure 7 illustrates a functional block diagram of hardware constituting the deliverer terminal 67 (27) according to the embodiment of the present invention. An operation of the deliverer terminal 67 is implemented by each operation of the hardware described below and a cooperation operation between software and the hardware.

In Figure 7, a deliverer terminal 700 as an entire hardware block includes an input unit 701, a storage unit 702, a central processing unit 703, a display unit 704, a control unit 705, a communication interface unit 706, an output unit 707, a time measurement unit 708, a sensor unit 709, and a power supply unit 710, and the modules are appropriately connected, as needed, to one another via a communication bus and a power feed line (the lines are collectively represented as a wire connection 799 appropriately divided for convenience in Figure 7).

Respective basic configurations and functions of the components in the deliverer terminal 700 illustrated in Figure 7 are similar to those of the components in the tablet terminal 42 (22) illustrated in Figure 4 or are known, and detailed description thereof is omitted. The input unit 701 is composed of the hardware buttons 673 in Figure 6, a multi-touch input panel provided in the display 672 in Figure 6, a microphone, and the like, and the display unit 704 is composed of the display 672 and the like.

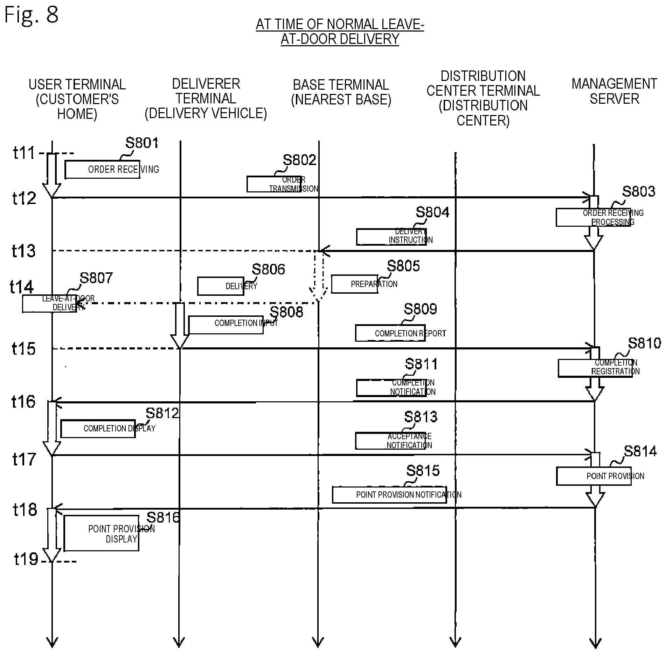

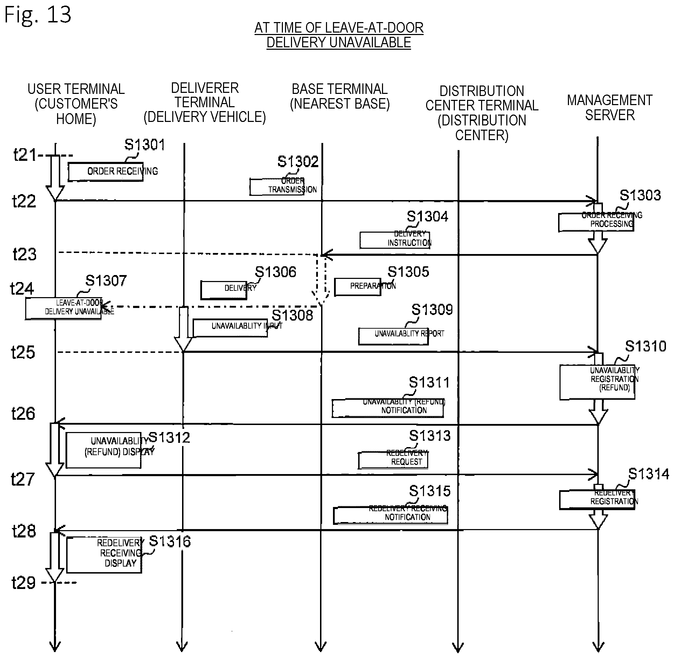

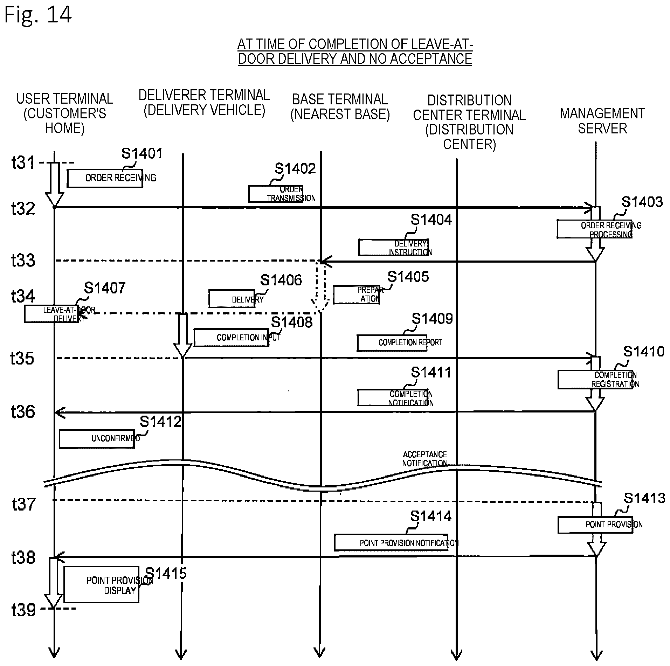

Figure 8 illustrates a processing operation flow at the time of normal leave-at-door delivery in the delivery system according to the embodiment of the present invention. The operation flow illustrated in Figure 8 illustrate a variation of delivery from a "nearest base" in the embodiment of the present invention. In Figure 8, a processing flow (a processing flow at the time of normal leave-at-door delivery) in which a commodity delivered from the nearest base is left by the door. In Figure 8, a thick solid line arrow in a vertical direction (e.g., a user terminal from a time t11 to a time t12) indicates internal processing in the terminal or a management server, a thin solid line arrow in a horizontal direction (e.g., between the user terminal and the management server at the time t12) indicates processing between each of the terminals and the management server, a thick one-dot-and-dash arrow in the vertical direction (a base terminal from a time t13 to a time t14) and a thin one-dot-and-dash line arrow in the horizontal direction (between a nearest base and a customer's home at the time t14) indicate work by a deliverer, and a thin broken line in the horizontal direction (e.g., between the user terminal and the base terminal at the time t13) indicates a point of time. Respective meanings of the solid line arrow, the one-dot-and-dash arrow, the broken line, and the like are similar to those in Figure 13 and Figure 14, described below.

### [Scene In which Leave-at-Door Delivery is Performed upon Delivery from Nearest Base]

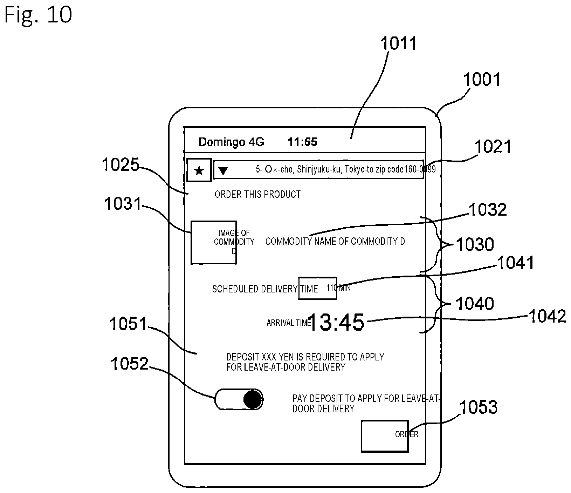

At the time t11 to the time t12 illustrated in Figure 8, the user terminal receives an order for a commodity while switching a screen to a commodity selection screen, an order screen, or the like depending on a user's operation for an input unit (step S801). In the one embodiment, the user terminal also receives designation or indication of leave-at-door delivery (details of which will be described below with reference to Figure 10). It is assumed that the leave-at-door delivery has been designated or indicated.

At the time t12, the user terminal transmits, when it receives the order from a user via the input unit, a content of the order to the management server (step S802). The management server 21 that has received the content of the order performs order receiving processing at the time t12 to the time t13. In the one embodiment, in the order receiving processing, the content of the order received from the user terminal is registered in the customer information DB 311 and the sales management DB 312 in association with a customer (a client or an orderer), and a leave-at-door delivery fee is collected from the customer. The collected leave-at-door delivery fee, together with a price of the commodity itself (a delivery charge when a package is to be delivered), can be settled using information about a credit card or the like of the customer in the one embodiment. In another embodiment, a user can pay a leave-at-door delivery fee using points already accumulated by himself/herself.

In the embodiment of the present invention, the leave-at-door delivery fee may be uniform. The leave-at-door delivery fee may be changed depending on the size of the commodity or the like and the price of the commodity or the like.

The settlement is not limited to be implemented by a single management server but can also be performed by the management server communicating with another settlement server. Then, the management server transmits an instruction to deliver the ordered commodity to the base terminal at the nearest base (step S804).

The base terminal at the nearest base that has received the delivery instruction displays an instruction to prepare shipment to a display unit. A deliverer prepares delivery of the ordered commodity at the time t13 to the time t14 based on the shipment preparation instruction (step S805). Then, at the time t14, the deliverer delivers the commodity to a delivery destination (customer's home) using a delivery vehicle (step S806).

In the flow illustrated in Figure 8, the leave-at-door delivery has been designated or indicated from the user. Accordingly, when the deliverer arrives at the customer's home, the deliverer leaves the commodity by the door based on a system operation in the embodiment of the present invention (step S807). "Leave-at-door delivery" herein referred to means delivering and putting the commodity at a predetermined location at the delivery destination even when a recipient is absent or its service. As the predetermined location in this case, one or more of an entrance, a home delivery box, a gas meter box, a bicycle basket, a garage, and a reception desk in a building, for example, can be used.

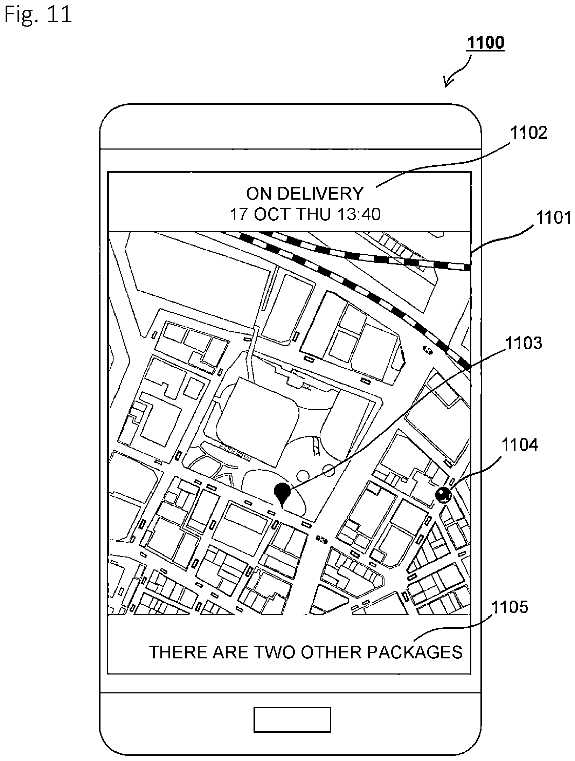

To implement a variation of the order receiving/delivery described with reference to Figure 8, an inventory quantity for each commodity in each base, a delivery time period between bases, and a delivery time period to a customer's home are managed, are calculated again each time, and are updated and controlled as an example in the management server 21. The commodity is tracked after shipment from the base, a current position of the commodity that is being delivered is updated and managed, and a scheduled arrival time is calculated again and is appropriately notified to a customer terminal and a movement terminal of a deliverer according to an additional order or a change of the content of the order. In such a case, an example of the screen to be displayed on the user terminal will be described below with reference to Figure 11.

When the leave-at-door delivery is completed, a deliverer terminal receives input of the completion of the leave-at-door delivery in response to a deliverer's operation (step S808), and transmits a report that the leave-at-door delivery has been completed to the management server (step S809) at the time t14 to a time t15 in Figure 8. The management server that has received the report that the leave-at-door delivery has been completed registers the completion of the leave-at-door delivery in the sales management DB (312 in Figure 3) (step S810) at the time t15 to a time t16. The management server transmits a leave-at-door delivery completion notification for notifying that the leave-at-door delivery has been completed to the user terminal (step S811). Although the leave-at-door delivery completion notification is preferably a push notification to the user terminal, the present invention is not limited to this. The leave-at-door delivery completion notification may be made at a timing at which an access (that is based on a customer's operation or is automatically performed periodically by the user terminal, for example) has been made from the user terminal to the management server.

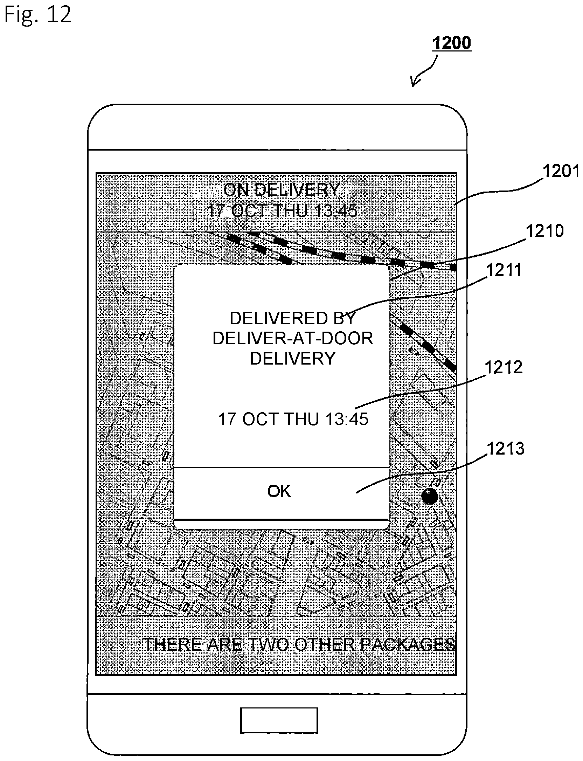

The user terminal that has received the leave-at-door delivery completion notification from the management server displays the completion of the leave-at-door delivery (step S812) at the time t16 to a time t17. In the one embodiment, on the user terminal, the completion of the leave-at-door delivery is displayed, and an acceptance button (1213 in Figure 12) is displayed. When an intension of acceptance from the customer is confirmed by the button being pressed, the user terminal transmits to the management server an acceptance notification representing the intension of acceptance from the customer (step S813) at the time t17.

The management server that has received the acceptance notification performs point provision processing (step S814) at the time t17 to a time t18. In the embodiment of the present invention, the point provision processing (step S814) is processing for providing points corresponding to an amount obtained by adding a predetermined amount of money to the whole of the leave-at-door delivery fee collected from the customer when the leave-at-door delivery is designated to the customer (the orderer of the commodity) (step S803). When the points are provided, the management server adds the points to a total amount of the points in the customer information DB (311 in Figure 3), to update the total amount of the points. Setting may be performed such that the larger the number of times of use of the leave-at-door delivery by the customer is, the larger points to be provided is (e.g., the larger a reduction rate is). This makes it possible to promote the use of the leave-at-door delivery.

Then, the management server transmits to the user terminal a point provision notification for notifying that the points have been provided and notifying an added amount and a total value of the points (step S815). The transmission may be positioned as a part of the point provision processing.

The user terminal that has received the point provision notification displays on the display unit a content of the point provision notification (step S16) at the time t18 to a time t19.

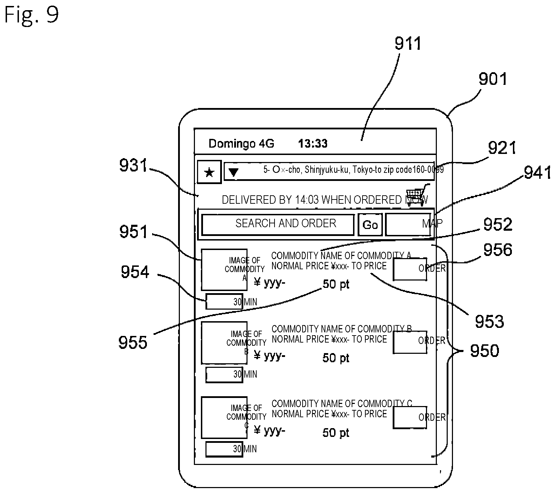

Figure 9 to Figure 10 illustrate a display example of an information processing apparatus (user or customer terminal) in the delivery system according to the embodiment of the present invention. The display examples respectively illustrate variations of a mechanism for receiving an order for a commodity from a customer in the embodiment of the present invention. In the order receiving mechanism, commodities are guided and an order can be received at various timings on respective screens of a WEB site (not illustrated) on an electronic commerce server directed toward the user terminal and a terminal application of the user terminal or the like. The present invention is not limited to these. However, examples of the scene include respective scenes in the following items (S1) to (S4).
(S1) When a customer accesses a WEB site directed toward a user terminal or starts an application on the user terminal, commodities are guided and an order is received. (S2) When the customer is attempting to purchase a commodity on the WEB site directed toward the user terminal or a terminal such as the user terminal, commodities are guided as "commodities ready to immediate and together delivery" and an order is received. (S3) When an action history (a page view, a purchase pattern, etc.) of the customer is analyzed, to match predetermined action criteria, target commodities are guided and an order is received using a notification function of a smartphone application, for example. (S4) While a commodity is being delivered to the customer (e.g., while a commodity is being delivered from a distribution center to a nearest base), commodities that have been stocked in the nearest base are guided and an additionally order is received as a commodity that can be together delivered.

Figure 9 illustrates an example of a screen of a user terminal configured such that commodities are guided and an order can be received from a customer. In the same drawing, a header 911 including a current time display, a display column 921 in which a current address or a current location is displayed, a message 931 "Delivered by 14:03 when ordered now", and a search column 941 are displayed on a screen of a customer terminal 901, and a list of commodities that can be delivered to a customer's home in a short time (e.g., 30 minutes or one hour) is displayed in a commodity display column 950. Although even commodities A to C are displayed in the same drawing, the present invention is not limited to this. More commodities can also be presented by scrolling means and page ejection means not illustrated. Narrowing-down based on a desired commodity genre or commodity category can also be performed by a search keyword or the like for the search column 941.

As to a content of each of commodities to be displayed in the commodity display column 950, a commodity name 952, together with a commodity image 951, is presented, and a normal price and a sales price 953 are also presented for a commodity A by way of example. Further, an estimated arrival time 954 for a case where the commodity A is ordered now is displayed. A provided point 955 at the time of purchase is also presented.

When the customer desires to order the commodity A, the customer can shift the screen to an order procedure screen, for example, by pressing an order button 956 on the screen.

In Figure 9, it can be confirmed how respective information about a commodity B and a commodity C are provided, like the information about the commodity A.

Figure 10 illustrates an example of a screen of a user terminal configured such that a commodity can be ordered and leave-at-door delivery can be designated or indicated. In Figure 10, a header 1011 including a current time display, a display column 1021 in which a current address or a current location is displayed, a message 1025 "Order this product" and a commodity display column 1030 relating to a commodity (here, a commodity D) to be ordered, and a display column 1040 relating to information about delivery are displayed on a screen of a user terminal 1001. The commodity display column 1030 includes a commodity image 1031 and a commodity name 1032 of the commodity to be ordered. The display column 1040 includes an expected arrival time 1041 and an expected commodity arrival time 1042 required from the order to delivery.

Further, on the screen of the user terminal 1001, an amount description 1051 of a leave-at-door delivery fee (deposit), a toggle button 1052 for designating or indicating or applying for leave-at-door delivery, and an order button 1053 are displayed. As illustrated in Figure 10, when the leave-at-door delivery is designated or indicated, the leave-at-door delivery fee (deposit) needs to be paid. In the one embodiment, the leave-at-door delivery fee (deposit) can be positioned as a deposit caused by the leave-at-door delivery or an insurance premium of the leave-at-door delivery, for example.

In the one embodiment, the customer uses the toggle button 1052 to set whether or not leave-at-door delivery is used, and presses the order button 1053. If the toggle button 1052 is set to "Apply for leave-at-door delivery", leave-at-door delivery can be designated or indicated. Although only whether or not leave-at-door delivery is used can be set in Figure 10, there may be provided an interface not illustrated for designating a location (an entrance, a home delivery box, etc.) for the leave-at-door delivery. Implementation examples include a select box for selecting the location for the leave-at-door delivery.

Figure 11 illustrates an example of a screen for presenting or the like to a user a current position or the like of a commodity that is being delivered. On the screen in the same drawing, the current position or the like of the commodity that is being delivered is displayed with a dedicated application started at a user terminal. In Figure 11, a map display 1101, a header 1102 including a message "This product is on delivery" and a current time display, an icon 1103 representing a current position of a delivery vehicle loaded with the commodity that is being delivered, a delivery destination icon 1104 representing a position of a customer's home as a delivery destination, and a footer 1105 that displays information about a commodity (another commodity) other than the selected commodity are displayed on a screen of a user terminal 1100. The user can confirm the current position of the delivery vehicle, a road to the delivery destination, and the existence of the other commodity by seeing the screen illustrated in Figure 11.

Although the icon 1103 representing the current position of the delivery vehicle loaded with the commodity that is being delivered is displayed in a center portion of the screen in the example illustrated in Figure 11, the present invention is not limited to this. The delivery destination icon 1104 representing the position of the customer's home as the delivery destination may be displayed in the center portion of the screen. The icons may be switchably mounted.

Figure 12 illustrates an example of a screen of a user terminal that notifies a user that leave-at-door delivery has been completed. In the present embodiment, the screen in the same drawing is displayed when the leave-at-door delivery has been completed with a dedicated application started at the user terminal and the user terminal has received a leave-at-door delivery completion notification from a management server (step S812 in Figure 8). In Figure 12, a leave-at-door delivery completion notification window 1210 is displayed on a screen 1201 of a user terminal 1200. The leave-at-door delivery completion notification window 1210 includes a message 1211 "Delivered by leave-at-door delivery", a leave-at-door delivery completion notification date 1212, and an acceptance button 1213. In the one embodiment, when the user presses the acceptance button 1213, the user terminal makes an acceptance notification to the management server (step S813 in Figure 8), and the management server that has received the acceptance notification performs point provision processing for the user (steps S814 and S815). Points are provided to the user as the point provision processing is performed.

Although the number of points to be provided is preferably a number of points having a value equivalent to that of a leave-at-door delivery fee, the present invention is not limited to this.

### [When Leave-at-Door Delivery is unavailable]

Figure 13 illustrates a processing operation flow in a case where leave-at-door delivery is unavailable in the delivery system according to the embodiment of the present invention. In the same drawing, a processing flow in a case where the leave-at-door delivery is unavailable due to a situation at a delivery destination (a processing flow at the time of the leave-at-door delivery being unavailable), although a deliverer has attempted to leave a commodity delivered from a nearest base by the door is illustrated. Various situations are assumed as a case where the leave-at-door delivery is unavailable although the deliverer has attempted the leave-at-door delivery, such as a case where the leave-at-door delivery cannot be performed from the viewpoint of preventing theft because the periphery of the delivery destination is crowded with people, a case where the weather is unsuitable for the leave-at-door delivery, for example, the rain or the wind is strong, and a case where a deliverer cannot reach an entrance or the like of the delivery destination because a door to an apartment automatically locks.

Steps S1301 to S1306 at a time t21 to a time t24 illustrated in Figure 13 are respectively similar to steps S801 to S806 at the time t11 to the time t14 illustrated in Figure 8, and detailed description thereof is omitted.

When leave-at-door delivery is unavailable, although a deliverer has attempted the leave-at-door delivery at the time t24 (step S1307), a deliverer terminal receives input of the unavailability of leave-at-door delivery in response to a deliverer's operation (step S1308) at the time t24 to a time t25, and transmits a report that the leave-at-door delivery is unavailable to a management server (step S1309). In the embodiment of the present invention, the deliverer may post an absence notice to a delivery destination together with the report that the leave-at-door delivery is unavailable. The management server that has received the report that the leave-at-door delivery is unavailable registers information about the leave-at-door delivery being unavailable, together with area information of the delivery destination, in the sales management DB (312 in Figure 3) at the time t25 to a time t26 (step S1310; Here, refund processing is also performed, as described below). Examples of the area information include information about the same range as those of the nearest areas 140, 150, and 160 (Figure 1), area information using an area in a narrower range than those of the nearest areas as a unit, and street information or neighborhood information including the delivery destination, although not limited to these. The management server can perform control, by storing and managing the information about the leave-at-door delivery being unavailable, together with the area information, such that "designation of leave-at-door delivery" cannot be performed or set the leave-at-door delivery designation itself to non-display at the time of an order from a specific client or a specific area (step S1301). For example, the management server instructs the user terminal not to be able to select the displays 1051 and 1052 on the order screen (Figure 10). Alternatively, the management server or the user terminal performs control such that the displays 1051 and 1052 are not included on the order screen (Figure 10) to be transmitted to the user terminal.

The management server performs processing for refunding a leave-at-door delivery fee (deposit) (step S1310). In the refund processing according to the embodiment of the present invention, the management server refunds the leave-at-door delivery fee (deposit) to a designated account of a customer (step S1310). The leave-at-door delivery fee may be refunded by returning points instead of refunding cash. Alternatively, the customer may be made to be able to select either refund by cash or return by points via an interface not illustrated at the time of refunding. The management server notifies the user terminal that the leave-at-door delivery has been unavailable and the leave-at-door delivery fee has been refunded (or will be refunded) (step S1311).

Alternatively, in another embodiment of the present invention, a notification that leave-at-door delivery is unavailable or refund (or point return) processing may be respectively separate processes. In this case, only a notification that leave-at-door delivery is unavailable is made in step S1311, and refund or point return processing is separately performed later. As a time difference therebetween, various examples such as "several minutes later", "several hours later", or "several days later" can be adopted.

The user terminal that has received the notification indicates on a display unit (the display 422 or the like illustrated in Figure 4) that the leave-at-door delivery has been unavailable and that the leave-at-door delivery fee has been refunded (or will be refunded) at the time t26 to a time t27 (step S1312).

In the one embodiment, control may be performed such that a redelivery request screen (not illustrated) is displayed when a redelivery request button not illustrated is pressed, although the present invention is not limited to this. In this case, when necessary items (a date, etc.) for redelivery are inputted and a transmission button is pressed on the redelivery request screen, the user terminal is controlled to transmit a redelivery request to the management server (step S1313).

The management server that has received the redelivery request registers a content of the redelivery request in the sales management DB (312 in Figure 3) (step S1314) at the time t27 to a time t28. The management server transmits a redelivery receiving notification to the user terminal (step S1315). The user terminal that has received the redelivery receiving notification displays a content of the receiving on the display unit (step S1316) at the time t28 to a time t29. A redelivery request may be made using not the user terminal but a telephone or the like.

### [When Leave-at-Door Delivery is Completed but Acceptance from Customer is not Obtained]

Figure 14 illustrates a processing operation flow in a case where leave-at-door delivery has been completed but an acceptance from a customer is not obtained in the delivery system according to the embodiment of the present invention. Figure 14 illustrates a processing flow in a case where a deliverer can complete the leave-at-door delivery for a commodity delivered from a nearest base but an acceptance from the customer cannot be obtained (when the customer does not press the acceptance button 1213 (Figure 12)) (a processing flow at the time of completion of the leave-at-door delivery and no acceptance from the customer). As a case where the customer does not press the acceptance button, a case where a dedicated application has not been started and a case where the acceptance button 1213 is left without being pressed, although the leave-at-door completion notification window 1210 is displayed, for example, are assumed in addition to a case where a power supply of a terminal remains off, for example.

In the processing flow illustrated in Figure 14, if a predetermined period has elapsed since leave-at-door delivery was completed even when an acceptance from a customer is not obtained, point provision processing is performed assuming that the leave-at-door delivery has been normally completed (the customer has safely received a commodity).

Steps S1401 to S1411 at a time t31 to a time t36 illustrated in Figure 14 are respectively similar to steps S801 to S811 at the time t11 to the time t16 illustrated in Figure 8, and detailed description thereof is omitted. In another embodiment of the present invention, control can also be performed such that step S1411 is not performed in a case where a power supply of a user terminal remains off and a case where a leave-at-door delivery completion notification is made when an access from the user terminal to a management server is made.

At the time t36, if the management server transmits a leave-at-door delivery completion notification to the user terminal (step S1411), but a customer has not yet confirmed the notification (step S1412), the management server starts to count a time period elapsed since the leave-at-door delivery was completed. The start of the counting may be another timing after the completion of the leave-at-door delivery instead of using transmission of the leave-at-door delivery completion notification as a trigger. When a count value exceeds a predetermined threshold value (that may be any value in a range from several hours to one week or any value outside the range) (at a time t37 in Figure 14), the management server performs point provision processing (step S1413) at the time t37 to a time t38.

In another embodiment of the present invention, control may be performed to confirm on the management server side whether or not a leave-at-door notification from the management server has been confirmed by the user for each fixed time (e.g., for 30 minutes, for one hour, for three hours, for six hours, for 12 hours, or for one day).

Steps S1413 to S1415 illustrated in Figure 14 are respectively similar to steps S814 to S816 illustrated in Figure 8. In the one embodiment, control may be performed such that the number of points (S814 in Figure 8) to be provided when the acceptance from the customer has been obtained is made larger than the number of points (S1413 in Figure 14) to be provided when the acceptance from the customer has not been obtained (a return rate is increased). In this case, the acceptance from the customer will be able to be easily obtained.

### [Effect according to embodiment of invention]

According to the embodiment of the present invention as described above, the display unit (504) in the user terminal (500 in Figure 5) displays a leave-at-door delivery fee when leave-at-door delivery is designated (S801 in Figure 8, and Figure 10), and displays a point provision notification on condition that the leave-at-door delivery is completed (S816 in Figure 8). The control unit (505 in Figure 5) in the user terminal notifies the management server of information about the leave-at-door delivery when the leave-at-door delivery is designated on the leave-at-door delivery designation screen (Figure 10) (S802 in Figure 8). Further, the control unit (705) in the deliverer terminal (700 in Figure 7) notifies the management server of the completion of the leave-at-door delivery when the completion of the leave-at-door delivery is inputted on the leave-at-door delivery completion input screen (S809 in Figure 8). Further, the control unit (305) in the management server (300 in Figure 3) registers a need for the leave-at-door delivery in the sales management DB (312) on condition that the designation of the leave-at-door delivery has been received from the user terminal, and collects the leave-at-door delivery fee from a customer (a client of the leave-at-door delivery) (S803 in Figure 8). In addition, the control unit in the management server performs point provision processing on condition that the completion of the leave-at-door delivery has been received from the deliverer terminal (S814).

According to the above-described embodiment, the leave-at-door delivery fee is collected from the customer when the leave-at-door delivery is designated, thereby making it possible to urge the customer to deliberately designate the leave-at-door delivery. The point provision processing is performed when the leave-at-door delivery is completed. This makes it possible to urge the customer to designate the next and subsequent leave-at-door delivery services.

The foregoing makes it possible to enhance the effectiveness of the leave-at-door delivery, reduce the frequency of a redelivery, and easily cope with shortage of labor.

According to the embodiment of the present invention, the display unit (704) in the deliverer terminal (700 in Figure 7; the company terminal) displays the leave-at-door delivery unavailable input screen into which the unavailability of leave-at-door delivery is inputted when the leave-at-door delivery at a predetermined location cannot be performed (S1308 in Figure 13), and the control unit (705 in Figure 7) notifies the management server that the leave-at-door delivery is unavailable when the unavailability of leave-at-door delivery is inputted (S1309 in Figure 13). The control unit (305 in Figure 3) in the management server registers the unavailability of leave-at-door delivery, together with the area information of the delivery destination, in the sales management DB (312 in Figure 3), and performs refund processing for refunding the leave-at-door delivery fee to the customer (the client) when the unavailability of leave-at-door delivery is received (S1310 in Figure 13).

This makes it easy to refund the leave-at-door delivery fee to the customer when the unavailability of leave-at-door delivery has occurred. Information about the leave-at-door delivery being unavailable, together with the area information, is stored, thereby making it possible to perform control such that "designation of leave-at-door delivery" cannot be performed at the time of an order from a specific client or area. This makes it possible to reduce an unnecessary load caused by performing processing for leave-at-door delivery regardless of the unavailability of leave-at-door delivery.

In the embodiment of the present invention, the management server (300 in Figure 3) transmits the leave-at-door delivery completion notification for notifying the user terminal (500 in Figure 5) of completion of the leave-at-door delivery on condition that the completion of the leave-at-door delivery has been received from the deliverer terminal (700 in Figure 7; the company terminal) (S811 in Figure 8). The user terminal displays, when it receives the leave-at-door delivery completion notification, the leave-at-door delivery completion notification (1211 in Figure 12) and the acceptance button that inputs an acceptance of the completion of the leave-at-door delivery from the customer (requestor) (1213; the acceptance input display) (S812 in Figure 8). When the acceptance from the customer has been inputted, the user terminal notifies the management server of the acceptance from the customer (S813 in Figure 8). Further, the management server performs the point provision processing when it receives the acceptance from the customer (S814). Further, the management server performs the point provision processing (S1413) when a predetermined period has elapsed even when it does not receive an acceptance from the customer (client) since the leave-at-door delivery was completed (S1408 in Figure 14).

When the completion of the delivery is inputted to the deliverer terminal, if the point provision processing is performed by using the input of the acceptance from the customer as a trigger, it is possible to urge acceptance confirmation (receiving confirmation) from the customer. Even when the acceptance from the customer is not inputted, the point provision processing is enabled, thereby making it possible to improve customer's convenience associated with point provision.

### [Modification]

Although leave-at-door delivery has been set at the time of an order (S801 in Figure 8, and Figure 10) in the above-described embodiment, the present invention is not limited to this. The leave-at-door delivery may be set until a deliverer visits a delivery destination at the time of redelivery, for example. For example, leave-at-door delivery can be newly designated from the time of an order to the time of completion of delivery (also including the time of redelivery), or a delivery date designated by a customer after the leave-at-door delivery has been designated can be changed.

The deliverer terminal may be configured such that (1) determination whether or not leave-at-door delivery has been designated at a current time point and (2) a location of the leave-at-door delivery (e.g., an entrance of a house or a foot of a gas meter) is displayed when the leave-at-door delivery has been designated (a known user interface is adopted as display means in this case).

Further, the leave-at-door delivery can be designated from the time of the order to the time of the completion of the delivery, as described above. When the leave-at-door delivery has been designated or additionally designated after the start of the delivery, for example, this can also be notified to the deliverer by notifying a deliverer terminal of a content of the designation and a content of a change (a PUSH notification as an example). The presence or absence of the designation of the leave-at-door delivery and the location of the leave-at-door delivery are substantially reflected in real time on the deliverer terminal every time they are updated. Alternatively, in another embodiment, a configuration in which the deliverer is not notified can also be adopted.

Although the deliverer has input the completion of the leave-at-door delivery at the deliverer terminal carried thereby (S808 in Figure 8), the deliverer may input the completion of the leave-at-door delivery at the base terminal or the distribution center terminal after returning to the nearest base or the distribution center. In other words, the base terminal or the distribution center terminal may be used as a company terminal instead of the deliverer terminal.

Although points corresponding to an amount obtained by adding a predetermined amount of money to the whole of a leave-at-door delivery fee (deposit) has been provided to a customer (an orderer of a commodity) as the point provision processing (step S814 in Figure 8) in the above-described embodiment, points to be provided are not limited to this, but may be points corresponding to a part or the whole of the leave-at-door delivery fee. Alternatively, the points to be provided may be points corresponding to an amount obtained by adding a predetermined amount of money to a part of the leave-at-door delivery fee or points corresponding to only the predetermined amount of money.

Although the point provision processing (S814) has been performed at a time point where the management server has received the acceptance notification from the customer (S813 in Figure 8) in the above-described embodiment, the point provision processing may be performed at another timing after completion of the leave-at-door delivery.

Although when the leave-at-door delivery has been unavailable, the unavailability of leave-at-door delivery, together with area information of a delivery destination, is registered and is used as information about the unavailability of setting of future leave-at-door delivery in the above-described embodiment, information about a trouble (e.g., a loss of a commodity) for each customer, for example, may be used as the information about the unavailability of the setting of the future leave-at-door delivery. In this case, when being reached out by a customer to inform that a commodity has not yet been arrived after leave-at-door delivery has been completed, a base terminal, a distribution center terminal, or a management server to input the trouble information, which can be stored in the customer information DB (311 in Figure 3) for use. An embodiment in which information about the leave-at-door delivery being unavailable is neither registered nor stored is also possible.

Although a case where the management server issues the delivery instruction to the base terminal has been described in examples illustrated in Figure 8, Figure 13, and Figure 14, similar processing can also be performed for a case where the management server issues a delivery instruction to the distribution center terminal.

Although the embodiment of the delivery system or the like has been described above based on specific examples, an implementation as a recording medium having a program recorded thereon (an optical disk, a magneto-optical disk, a CD-ROM, a CD-R, a CD-RW, a magnetic tape, a hard disk, or a memory card as an example), for example, in addition to a method or a program for implementing a system or an apparatus can be taken as the embodiment of the present invention.

The one implementation of the program is not limited to an application program such as an object code to be compiled by a complier and a program code to be executed by an interpreter, but may be a form of a program module or the like to be incorporated into an operating system.

Further, the program can also be configured such that all processes need not necessarily be performed in only a CPU on a control substrate but some or all of the processes are performed by another processing unit (a DSP, etc.) mounted on an extension board or an extension unit added to the substrate, as needed.

All of constitutional requirements described in the present specification (including the claims, the abstract, and the drawings) and/or all steps in disclosed methods or processes can be combined in any combination excluding a combination in which these features are mutually exclusive.

Each of the features described in the present specification (including the claims, the abstract, and the drawings) can be replaced with an alternative feature serving an identical purpose, the same purpose, or a similar purpose unless otherwise clearly contradicted. Therefore, each of the disclosed features is only an example of a series of same or equivalent comprehensive features unless otherwise clearly contradicted.

The present invention is not limited to any of the respective specific configurations of the above-described embodiments. The present invention can be extended to all of new features described in the present specification (including the claims, the abstract, and the drawings) or their combinations or steps of all described new methods or processes or their combinations.

### Reference Signs List

10 Delivery system
11 to 13 Distribution center
14 to 16 Nearest base
141 to 142, 151 to 153, 162 to 165, 199 Customer's home
20 Delivery system
21 Management server
22 Tablet terminal (one form of user terminal or company terminal (deliverer terminal or company terminal))
23 Mobile phone (one form of user terminal or company terminal (deliverer terminal or company terminal))
24 to 26 PC (one form of user terminal or company terminal (deliverer terminal or company terminal)
27 to 28 Deliverer terminal (that may include POS terminal)
37, 38 Communication line
39 Public line (dedicated line, Internet, etc.)

## Claims

1. A delivery system comprising:
a user terminal for designating leave-at-door delivery for delivering a delivery to a predetermined location at a delivery destination even when a recipient is absent;
a company terminal into which a deliverer inputs completion of the leave-at-door delivery; and
a management server that manages a progress status of the leave-at-door delivery, wherein
the user terminal comprises
a user display unit that displays a leave-at-door designation screen on which the leave-at-door delivery is designated, and
a user control unit that controls the user terminal,
the company terminal comprises
a company display unit that displays a leave-at-door delivery completion input screen into which the completion of the leave-at-door delivery is inputted, and
a company control unit that controls the company terminal,
the management server comprises
a leave-at-door delivery database that stores information about the leave-at-door delivery, and
a server control unit that controls the management server,
the user display unit
displays a leave-at-door delivery fee when the leave-at-door delivery is designated, and
displays a point provision notification for notifying that points corresponding to a part or the whole of the leave-at-door delivery fee or an amount obtained by adding a predetermined amount of money to the part or the whole of the leave-at-door delivery fee have been provided at least on condition that the leave-at-door delivery is completed,
the user control unit notifies, when the leave-at-door delivery has been designated on the leave-at-door delivery designation screen, the management server of information about the leave-at-door delivery,
the company control unit notifies, when the completion of the leave-at-door delivery is inputted on the leave-at-door delivery completion input screen, the management server of the completion of the leave-at-door delivery, and
the server control unit
registers a need for the leave-at-door delivery in the leave-at-door database at least on condition that the designation of the leave-at-door delivery is received from the user terminal, and collects the leave-at-door delivery fee from a client of the leave-at-door delivery, and
performs point provision processing for providing the points to the client of the leave-at-door delivery at least on condition that the completion of the leave-at-door delivery is received from the company terminal.

2. The delivery system according to claim 1, wherein
the company display unit displays, when the leave-at-door delivery at the predetermined location cannot be made, a leave-at-door delivery unavailable input screen for inputting the unavailability of leave-at-door delivery,
the company control unit notifies, when the unavailability of leave-at-door delivery has been inputted, the management server of the unavailability of leave-at-door delivery, and
the server control unit registers, when it receives the unavailability of leave-at-door delivery, the unavailability of leave-at-door delivery, together with area information of the delivery destination, in the leave-at-door delivery database, and performs refund processing for refunding the leave-at-door delivery fee to the client.

3. The delivery system according to claim 1 or 2, wherein
the management server transmits a leave-at-door delivery completion notification for notifying the user terminal of the completion of the leave-at-door delivery at least on condition that the completion of the leave-at-door delivery is received from the company terminal,
the user terminal
receives, when it receives the leave-at-door delivery completion notification, the leave-at-door delivery completion notification and input indicating that the client has accepted the leave-at-door delivery completion,
notifies, when the input indicating the acceptance from the client, the management server of the acceptance from the client,
the management server performs the point provision processing when it receives the acceptance from the client, and
the management server further performs the point provision processing when a predetermined period has elapsed even when the acceptance from the client has not been received since the leave-at-door delivery was completed.

4. A user terminal for designating leave-at-door delivery for delivering a delivery to a predetermined location at a delivery destination even when a recipient is absent,
the user terminal comprising:
a user display unit that displays a leave-at-door delivery designation screen for designating the leave-at-door delivery; and
a user control unit that controls the user terminal,
the user display unit
displays a leave-at-door delivery fee when the leave-at-door delivery is designated, and
displays a point provision notification for notifying that points corresponding to a part or the whole of the leave-at-door delivery fee or an amount obtained by adding a predetermined amount of money to the part or the whole of the leave-at-door delivery fee have been provided at least on condition that the leave-at-door delivery is completed, and
the user control unit notifies, when the leave-at-door delivery has been designated on the leave-at-door delivery designation screen, the management server of information about the leave-at-door delivery.

5. A management server that communicates with a user terminal for designating leave-at-door delivery for delivering a delivery to a predetermined location at a delivery destination even when a recipient is absent and a company terminal into which a delivery company inputs the completion of the leave-at-door delivery and manages a progress status of the leave-at-door delivery,
the management server comprising
a leave-at-door delivery database that stores information about the leave-at-door delivery, and
a server control unit that controls the management server, wherein
the server control unit
registers a need for the leave-at-door delivery in the leave-at-door database at least on condition that the designation of the leave-at-door delivery is received from the user terminal, and collects a leave-at-door delivery fee from a client of the leave-at-door delivery, and
performs point provision processing for providing points corresponding to a part or the whole of the leave-at-door delivery fee or an amount obtained by adding a predetermined amount of money to the part or the whole of the leave-at-door delivery fee to a client of the leave-at-door delivery at least on condition that the completion of the leave-at-door delivery is received from the company terminal.
